# EUROPEAN PATENT APPLICATION

(11) **EP 3 531 369 A1**
(43) Date of publication of application: **28.08.2019**
(21) Application number: 17864006.6
(22) Date of filing: 18.08.2017
(51) Int. Cl.: G06Q 50/20, G09B 21/00, A01K 15/02

(54) **INFORMATION PROCESSING DEVICE AND INFORMATION PROCESSING METHOD**

(30) Priority: 24.10.2016 JP 2016207643
(71) Applicant: Sony Corporation, Tokyo 108-0075 (JP); Sony Mobile Communications Inc., Shinagawa-ku Tokyo 140-0002 (JP)
(72) Inventor: SAKAI, Shimon, Tokyo 108-0075 (JP); NAKAGAWA, Ayumi, Tokyo 108-0075 (JP); HOSOKAWA, Satoshi, Tokyo 140-0002 (JP)
(74) Representative: MFG Patentanwälte Meyer-Wildhagen Meggle-Freund Gerhard PartG mbB
(86) International application number: PCT/JP2017/029583
(87) International publication number: WO 2018/079018

(57) **Abstract**

[Object] To provide an information processing device and an information processing method.

[Solution] The information processing device includes: an acquisition unit configured to acquire sensing data related to a target; and a transmission information generation unit configured to generate transmission information to be output to the target, on the basis of a transmission intention to the target and the sensing data.

## Description

### Technical Field

The present disclosure relates to an information processing device and an information processing method.

### Background Art

Technologies for communicating with a target who has difficulty in verbal communication, and for prompting an action have been discussed. For example, Patent Literature 1 describes a technology of controlling guidance for an animal by electrically stimulating a vestibular organ.

### Citation List

### Patent Literature

Patent Literature 1: JP 2006-296221A

### Disclosure of Invention

### Technical Problem

However, the technology described in Patent Literature 1 requires an electric current to be applied to the target who has difficulty in verbal communication. This is a heavy burden for the target. Accordingly, it is desired to reduce the burden for the target when guiding the target who has difficulty in verbal communication.

### Solution to Problem

According to the present disclosure, there is provided an information processing device including: an acquisition unit configured to acquire sensing data related to a target; and a transmission information generation unit configured to generate transmission information to be output to the target, on the basis of a transmission intention to the target and the sensing data.

In addition, according to the present disclosure, there is provided an information processing device including: a communication unit configured to send sensing data related to a target and receive transmission information to be output to the target; and a processing unit configured to perform a process on the basis of the transmission information.

In addition, according to the present disclosure, there is provided an information processing method including: acquiring sensing data related to a target; and generating, by a processor, transmission information to be output to the target, on the basis of a transmission intention to the target and the sensing data.

In addition, according to the present disclosure, there is provided an information processing method including: sending sensing data related to a target and receiving transmission information to be output to the target; and performing a process by a processor on the basis of the transmission information.

### Advantageous Effects of Invention

As described above, according to the present disclosure, it is possible to reduce the burden for the target when guiding the target who has difficulty in verbal communication.

Note that the effects described above are not necessarily limitative. With or in the place of the above effects, there may be achieved any one of the effects described in this specification or other effects that may be grasped from this specification.

### Brief Description of Drawings

FIG. 1 is an explanatory diagram illustrating an overview according to an embodiment of the present disclosure.
FIG. 2 is a block diagram illustrating a functional configuration example of a control unit 10 included in an information processing device 1 according to the embodiment.
FIG. 3 is a table showing an example of estimation rules in which states of targets are associated with observation results obtained on the basis of sensing data.
FIG. 4 is a flowchart illustrating an operation example according to the embodiment.
FIG. 5 is a block diagram illustrating a configuration of an information processing device 1-2 according to a modification 1.
FIG. 6 is a flowchart illustrating an operation example according to the modification.
FIG. 7 is a block diagram illustrating a configuration example of a learning device according to a modification 2.
FIG. 8 is a block diagram illustrating a configuration example of an output device according to the modification.
FIG. 9 is a flowchart illustrating an operation example of the learning device according to the modification.
FIG. 10 is a flowchart illustrating an operation example of the output device according to the modification.
FIG. 11 is an explanatory diagram illustrating a configuration of an information processing system 99 according to a modification 3.
FIG. 12 is a block diagram illustrating a configuration example of a server 7 according to the modification.
FIG. 13 is a block diagram illustrating a configuration example of a client terminal 8 according to the modification.
FIG. 14 is an explanatory diagram illustrating a hardware configuration example.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that, in this description and the drawings, structural elements that have substantially the same function and structure are sometimes distinguished from each other using different alphabets after the same reference sign. However, when there is no need in particular to distinguish structural elements that have substantially the same function and structure, the same reference sign alone is attached.

Note that, the description is given in the following order.
<<1. Overview>>
<<2. Configuration of control unit>>
<<3. Operation>>
<<4. Modifications>>
   <4-1. Modification 1>
   <4-2. Modification 2>
   <4-3. Modification 3>
<<5. Hardware configuration example>>
<<6. Conclusion>>

### <<1. Overview>>

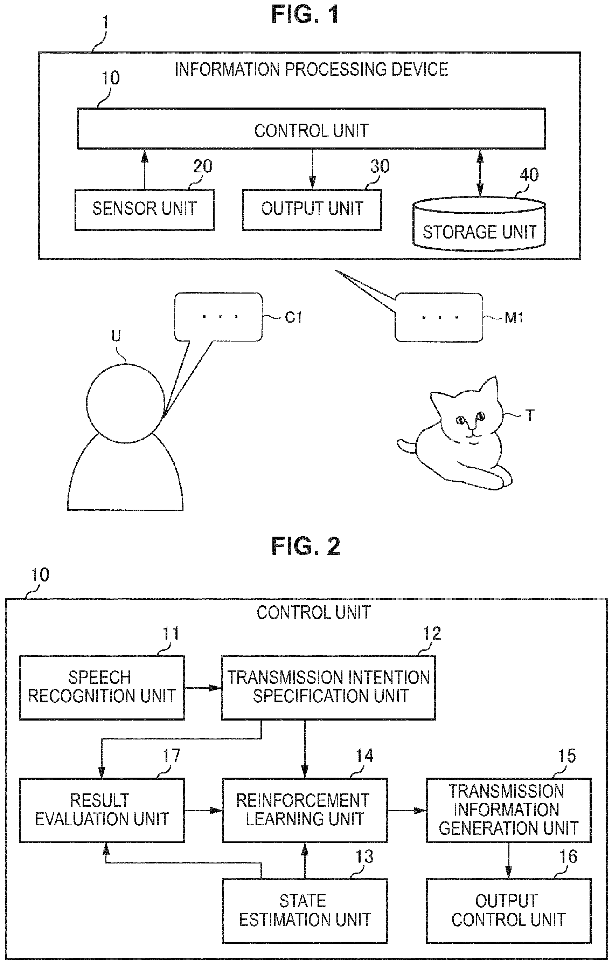

First, with reference to FIG. 1, an overview of an embodiment of the present disclosure will be described. FIG. 1 is an explanatory diagram illustrating the overview according to the embodiment. As illustrated in FIG. 1, an information processing device 1 according to the embodiment of the present disclosure includes a control unit 10, a sensor unit 20, an output unit 30, and a storage unit 40. In addition, as illustrated in FIG. 1, the information processing device 1 according to the embodiment outputs transmission information M1 to a target T who has difficulty in verbal communication, on the basis of a sound command C1 input by a user U.

Note that, FIG. 1 illustrates the example in which the target T is a cat. However, the target T may be another animal, an infant who has not understand language yet, an intractable patient such as amyotrophic lateral sclerosis (ALS), a dementia patient, or the like, for example.

The control unit 10 controls functions of respective units of the information processing device 1 illustrated in FIG. 1. In addition, the control unit 10 generates the transmission information M1 on the basis of sensing data related to the target T and the sound command C1 of the user U, and causes the output unit 30 to output the transmission information M1. For example, it is desirable that the transmission information M1 is information for guiding the target T in accordance with the user U's intention. Note that, a detailed configuration of the control unit 10 will be described later with reference to FIG. 2.

The sensor unit 20 senses information of the vicinity of the information processing device 1 and change therein. For example, the sensor unit 20 may include a microphone, a camera, a depth sensor, a motion detector, a temperature sensor (infrared sensor), a weight sensor, or the like. For example, the sensor unit 20 is capable of sensing the sound command C1 of the user U and providing it to the control unit 10 as an acoustic signal. In addition, the sensor unit 20 is capable of providing the control unit 10 with the sensing data related to the target T.

The control unit 10 is capable of acquiring various kinds of information related to the target T through a process based on the sensing data. For example, a target object detection process is performed on the basis of sensing data obtained by the camera or the depth sensor. Accordingly, it is possible to acquire information of a position and a movement speed of the target T. In addition, for example, it is possible to acquire information of an emotion of the target T by performing a facial expression detection process on the basis of sensing data (image information) obtained by the camera. In addition, by performing a gaze detection process on the basis of the sensing data obtained by the camera, it is possible to acquire information of a direction to which the target T pays attention, or information indicating that the eyes are opened, or the like, for example. In addition, by detecting an attitude on the basis of the sensing data obtained by the camera, it is possible to acquire information of a state related to the attitude of the target T (such as information indicating that the target T is wagging its tail, the target T is stretching, the target T is grooming itself, the tail of the target T is straight up, the target T is flattening its ears, or the like), for example. In addition, it is possible to acquire information related to a sound of the target T (whether or not the target T is crying, sound volume, frequency, length, or the like) by performing a sound volume measurement process or a voice activity detection (VAD) process on the basis of sensing data (acoustic information) obtained by the microphone. In addition, for example, it is possible to acquire information indicating whether or not the target T is getting out of a room or a house, on the basis of sensing data obtained by the motion detector. In addition, it is possible to acquire information related to a body temperature of the target T (whether or not the body temperature is higher than usual) on the basis of sensing data obtained by the temperature sensor. In addition, it is possible to acquire information indicating whether or not the target T is in a designated place (such as a place where the weight sensor is installed) on the basis of sensing data obtained by the weight sensor.

Note that, the information related to the target T that may be acquired on the basis of the sensing data is not limited to the above-described examples. Various kinds of information related to the target T may be acquired in accordance with the types of the sensors included in the sensor unit 20 and the processes performed by the control unit 10. In addition, the sensor unit 20 is capable of sensing change. Therefore, the information related to the target T may be acquired as consecutive information.

The output unit 30 outputs the transmission information M1 to the target T. For example, the output unit 30 may include a speaker that outputs acoustics, a display that outputs display, a light emitting device that outputs light, and the like. In addition, for example, since it is difficult for the target T to communicate verbally, it is possible for the output unit 30 to non-verbally output the transmission information M1. For example, in the case where the target T is an animal, the transmission information M1 may be acoustic information such as animal sounds, or acoustic information such as sound effects or music.

The storage unit 40 stores programs and parameters for causing the respective structural elements of the information processing device 1 to function. In addition, the storage unit 40 may store a pattern table that defines patterns (variations) of transmission information to be output to the target T. The pattern table may be prepared in advance, or may be registered appropriately by the user. In addition, the patterns may be sound waveform patterns such as animal sounds, voice of a mother of an infant, and sounds from a toy, for example.

In addition, the pattern may be multidimensional information including a plurality of elements (tone, sound pitch, intonation, speed, and the like). Such a configuration enables the control unit 10 to combine respective elements of a pattern and generate various kinds of transmission information.

Note that, the pattern included in the pattern table is not limited to the above-described examples. The pattern may be information other than acoustic information. For example, the pattern may be an animation video for infants, or a blinking pattern, repetition pattern, or the like related to light emission.

As described above, the information processing device 1 according to the embodiment is capable of guiding the target T without imposing a large burden on the target T, by outputting transmission information based on the sound command C1 of the user U to the target T who has difficulty in verbal communication.

The overview of the embodiment of the present disclosure has been described above. Next, with reference to FIG. 2, details of the control unit 10 included in the information processing device 1 according to the embodiment of the present disclosure will be described.

### <<2. Configuration of control unit>>

FIG. 2 is a block diagram illustrating a functional configuration example of the control unit 10 included in the information processing device 1 according to the embodiment. As illustrated in FIG. 2, the control unit 10 according to the embodiment functions as a speech recognition unit 11, a transmission intention specification unit 12, a state estimation unit 13, a reinforcement learning unit 14, a transmission information generation unit 15, an output control unit 16, and a result evaluation unit 17.

The speech recognition unit 11 recognizes voice (sound command) of a user acquired by the microphone included in the sensor unit 20, and converts the voice into a speech text.

The transmission intention specification unit 12 specifies a transmission intention to the target on the basis of the speech text input from the speech recognition unit 11. For example, the specified transmission information may include a transmission content to the target and a goal expected of the target (such as an action of the target that the user wants to prompt). A plurality of transmission intentions (pairs of transmission contents and goals that are associated with each other) may be registered on (stored in) the storage unit 40 in advance.

For example, in the case where the pairs of transmission contents and goals are registered in advance as transmission intentions, the transmission intention specification unit 12 may specify a pre-registered transmission intention as a transmission intention that should be specified when obtaining a speech text that matches the pre-registered transmission intention. Note that, the match between the transmission intention and the speech text is not limited to a case where the speech text completely matches the transmission contents included in the transmission intention. For example, the match between the transmission intention and the speech text may mean semasiological similarity.

For example, in the case where the target is an animal, a goal associated with a transmission content of "be quiet" may be to cause the target to stop crying for a predetermined period of time. In addition, a goal associated with a transmission content of "it's time to eat" may be that the target is positioned near a dish and the target is sitting. In addition, a goal associated with a transmission content of "good morning" may be that the target cries once and the target is relaxed.

In addition, in a case where the target is an infant, a goal associated with a transmission content of "play together" is that the target is smiling. In addition, a goal associated with a transmission content of "let me sleep" may be that the target is closing his/her eyes and keeping quiet.

In addition, in a case where the target is an intractable patient or a dementia patient, a goal associated with a transmission content of "let me calm down" may be that a response (sound/motion) from the target is a constant level or lower. In addition, a goal associated with a transmission content of "do not go outside the house" may be that the target is within a sensable area.

Note that, specification of a transmission intention performed by the transmission intention specification unit 12 is not limited thereto. For example, the transmission intention specification unit 12 may analyze a speech text input from the speech recognition unit 11, dynamically decide a transmission content and a goal, and generate (specify) a transmission intention.

The state estimation unit 13 estimates a state of a target on the basis of sensing data related to the target. The state estimation unit 13 according to the embodiment has a function of serving as an acquisition unit and acquiring sensing data related to the target from the sensor unit 20. In addition, the state estimation unit 13 estimates a state of the target from a target observation result obtained on the basis of the sensing data. For example, the state estimation unit 13 may estimate a state of the target from the observation result on the basis of an estimation rule that is prepared in advance and stored in the storage unit 40.

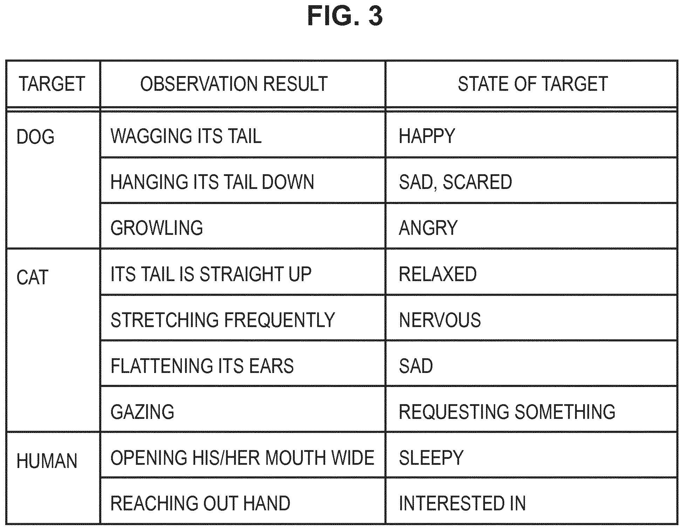

FIG. 3 is a table showing an example of the estimation rules in which states of targets are associated with observation results obtained on the basis of sensing data. As illustrated in FIG. 3, the state estimation unit 13 acquires an observation result corresponding to a target on the basis of sensing data. In addition, the state estimation unit 13 estimates a state of the target in accordance with the table illustrated in FIG. 3.

The reinforcement learning unit 14 illustrated in FIG. 2 updates a reinforcement learner through reinforcement learning. In addition, a transmission intention specified by the transmission intention specification unit 12 and a state of a target estimated by the state estimation unit 13 are input to the reinforcement learner. Accordingly, output from the reinforcement learner is obtained.

The reinforcement learning is described in Non-Patent Literature 1 listed below, for example. Therefore, detailed description thereof is omitted here. Note that, the contents of Non-Patent Literature 1 listed below are incorporated herein by reference.

Non-Patent Literature 1: Watkins, C.J.C.H., "Learning from Delayed Rewards.", 1989, Ph.D. thesis, Cambridge University.

For example, the reinforcement learning unit 14 performs reinforcement learning, where a state S represents a combination of a state of a target and a transmission intention, an action a represents a parameter such as change in sound pitch and an index indicating a pattern in a pattern table, and a reward R represents evaluation made by the result evaluation unit 17 (to be described later). When the reinforcement learning unit 14 performs the reinforcement learning, it is possible to obtain an updated reinforcement learner.

As represented by the following equation, the reinforcement learner outputs an action A that maximizes Q(S,a) on the basis of an expected reward Q(S,a). The reinforcement learning unit 14 provides the transmission information generation unit 15 with output (the action A) from the reinforcement learner. A = argmax_a Q(S,a)

The transmission information generation unit 15 generates transmission information on the basis of the output (the action A) from the reinforcement learner and a pattern table stored in the storage unit 40. For example, in the case where the transmission information is acoustic information, the transmission information generation unit 15 may generate transmission information by synthesizing a sound waveform pattern indicated by the index included in the action A. In addition, the transmission information generation unit 15 may generate transmission information on the basis of a parameter such as change in sound pitch or the like included in the action A.

The output control unit 16 controls output from the output unit 30 on the basis of the transmission information. The output control unit 16 may cause the transmission information to be output by using an output method (such as acoustic output, display output, or light emission output) corresponding to the transmission information.

The result evaluation unit 17 evaluates (determines) whether or not the goal is achieved, on the basis of the state of the target input from the state estimation unit 13. The evaluation made by the result evaluation unit 17 is provided to the reinforcement learning unit 14 as a reward regarding the reinforcement learning.

In addition, the result evaluation unit 17 may make an evaluation a predetermined period of time after the output unit 30 outputs the transmission information, for example. According to such a configuration, it is possible to reflect a result of outputting the transmission information in the reinforcement learner, and improve accuracy of the transmission information (accuracy of a guide to a goal).

### <<3. Operation>>

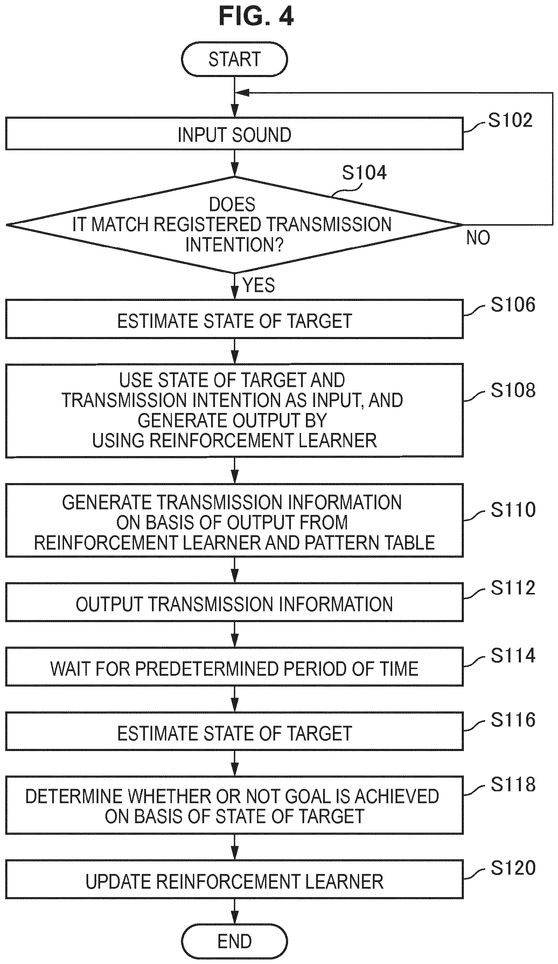

The functional configuration example of the control unit 10 included in the information processing device 1 according to the embodiment has been described above. Next, with reference to FIG. 4, an operation example according to the embodiment will be described. FIG. 4 is a flowchart illustrating the operation example according to the embodiment.

First, as illustrated in FIG. 4, a user first inputs a sound command (SI02). Next, the transmission intention specification unit 12 determines whether or not a registered transmission intention matches a speech text obtained by the speech recognition unit 11 recognizing the sound command (S104). The process returns to Step S102 in the case where the speech text does not match the registered transmission intention (NO in Step SI04).

In the case where the speech text matches the registered transmission intention (YES in Step S104), the state estimation unit 13 estimates a state of a target on the basis of sensing data (Step S106). Next, the reinforcement learning unit 14 inputs the transmission intention and the state of the target estimated in Step S106 to a reinforcement learner, and generates output (an action A) (Step SI08).

Next, the transmission information generation unit 15 generates transmission information on the basis of the output from the reinforcement learner and a pattern table (Step S110). The output unit 30 outputs the generated transmission information under the control of the output control unit 16 (Step S112).

The state estimation unit 13 waits for a predetermined period of time (Step S114), and then estimates a state of the target on the basis of the sensing data (Step S116). Next, the result evaluation unit 17 determines whether or not the goal is achieved on the basis of the state of the target estimated in Step S116 (Step S118). Next, the reinforcement learning unit 14 updates the reinforcement learner (Step S120).

Note that, the process illustrated in FIG. 4 is a mere example. The operation according to the embodiment is not limited thereto. For example, in the case where it is determined that the goal is not achieved in Step S118, the process may return to Step S108 after Step S120, and generation and output of transmission information may be repeated on the basis of output from the reinforcement learner updated in Step S120.

### <<4. Modifications>>

The embodiment according to the present disclosure has been described above. Next, some modifications of the embodiment according to the present disclosure will be described. Note that, the respective modifications to be described below may be separately applied to the embodiment according to the present disclosure, or may be applied to the embodiment according to the present disclosure in combination. Note that, the respective modifications may be applied instead of the configuration described in the embodiment according to the present disclosure, or may be applied in addition to the configuration described in the embodiment according to the present disclosure.

### <4-1. Modification 1>

In the above-described embodiment, the example of specifying a transmission intention on the basis of a sound command input by a user has been described. However, the present technology is not limited thereto. Hereinafter, an example of specifying a transmission intention on the basis of sensing data related to a target will be described as the modification 1.

### (Configuration example)

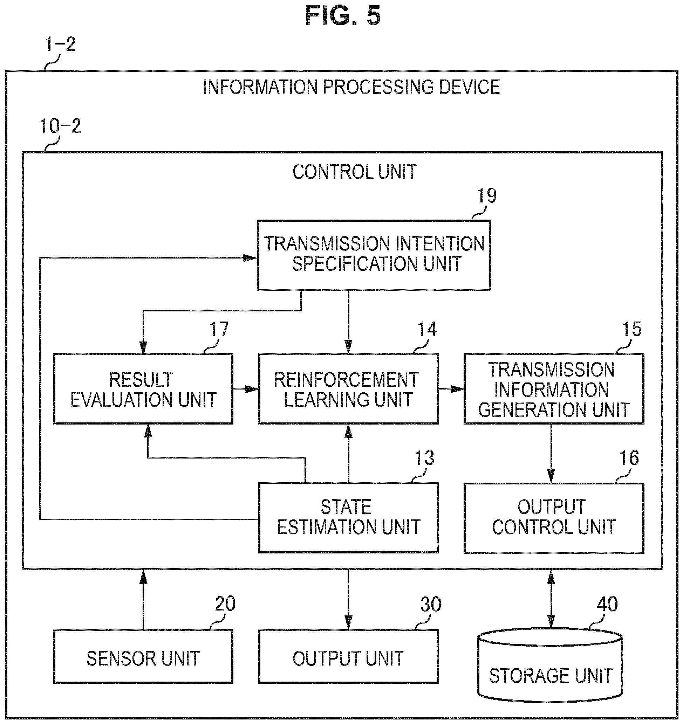

FIG. 5 is a block diagram illustrating a configuration of an information processing device 1-2 according to the modification. Among structural elements illustrated in FIG. 5, structural elements that are substantially similar to the respective structural elements illustrated in FIG. 1 and FIG. 2 are denoted with the same reference signs. Therefore, description will be given while appropriately omitting repeated description.

It is not necessary for a control unit 10-2 included in the information processing device 1-2 illustrated in FIG. 5 to have the function of the speech recognition unit 11. In addition, the control unit 10-2 is different from the control unit 10 illustrated in FIG. 2 in that a part of the function of a transmission intention specification unit 19 is different from the transmission intention specification unit 12.

The transmission intention specification unit 19 specifies a transmission intention on the basis of a state of a target estimated by the state estimation unit 13 on the basis of sensing data. For example, in the case where the state of the target satisfies a pre-registered condition, the transmission intention specification unit 19 may specify a transmission intention associated with the condition. Note that, the transmission intention specification unit 19 may specify a transmission intention on the basis of a temporary state of the target, or may specify a transmission intention on the basis of continuous change in the state of the target.

For example, in the case where the target is an animal, a condition that "the target cries frequently" may be associated with a transmission intention including the transmission content of "be quiet". In addition, a condition that "the target has cried for a short time in the morning" may be associated with a transmission intention including the transmission content of "good morning". In addition, a condition that "a scratching action is detected" may be associated with a transmission intention including a transmission content of "stop it".

In addition, in the case where the target is an infant, a condition that "the target starts crying" may be associated with a transmission intention including the transmission content of "let me sleep".

In addition, in the case where the target is an intractable patient or a dementia patient, a condition that "the target shouts consecutively" may be associated with a transmission intention including a transmission content of "let the target calm down". In addition, a condition that "the target tries to go outside the house alone" may be associated with a transmission intention including the transmission content of "do not go outside the house".

### (Operation example)

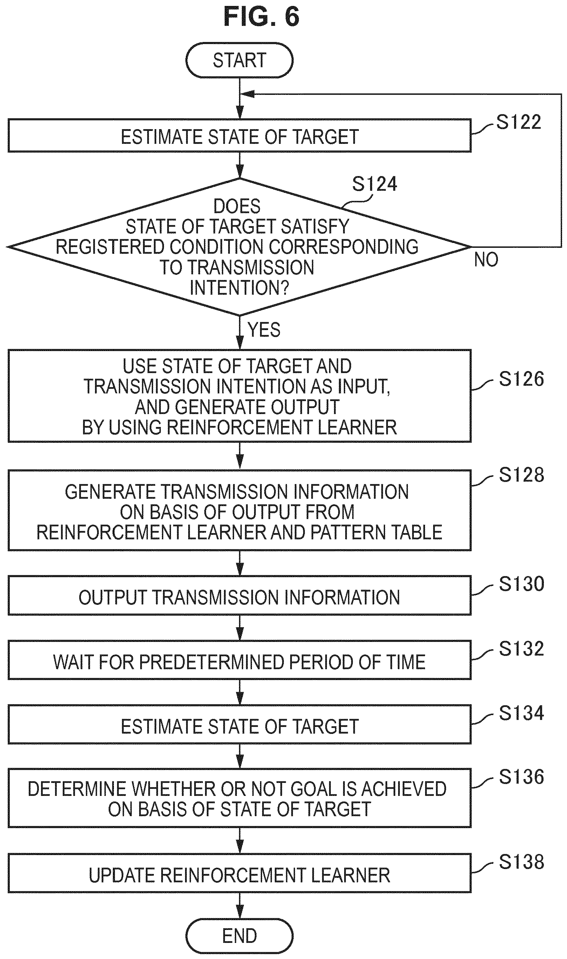

The configuration example according to the modification has been described above. Next, with reference to FIG. 6, an operation example according to the modification will be described. FIG. 6 is a flowchart illustrating an operation example according to the modification.

First, as illustrated in FIG. 6, the state estimation unit 13 estimates a state of a target on the basis of sensing data (Step S122). Next, the transmission intention specification unit 19 determines whether or not the state of the target satisfies a registered condition corresponding to a transmission intention (Step S124). The process returns to Step S122 in the case where the state of the target does not satisfy the registered condition corresponding to the transmission intention (NO in Step S124).

In the case where the state of the target satisfies the registered condition corresponding to the transmission intention (YES in Step S124), the reinforcement learning unit 14 inputs the transmission intention and the state of the target estimated in Step S122 to the reinforcement learner, and generates output (an action A) (Step SI26). Subsequent processes in Step S128 to Step S138 are substantially similar to the processes in Step S110 to Step S120 described with reference to FIG. 4. Accordingly, repeated description will be omitted.

### (Effect)

As described above, according to the modification, it is possible to automatically generate transmission information, output the transmission information, and update the reinforcement learner in accordance with the state of the target even in the case where the user does not input sound.

<4-2. Modification 2>

In the above-described embodiment, the example of performing reinforcement learning in accordance with output of transmission information has been described. However, the present technology is not limited thereto. Next, as the modification 2, an example of generating transmission information on the basis of output from a learner obtained through machine learning that has been performed in advance, will be described. Note that, the example in which a learning device that performs learning is different from an output device that generates and outputs transmission information will be described next. However, it is also possible that the learning device and the output device are implemented by a same device.

### (Configuration of learning device)

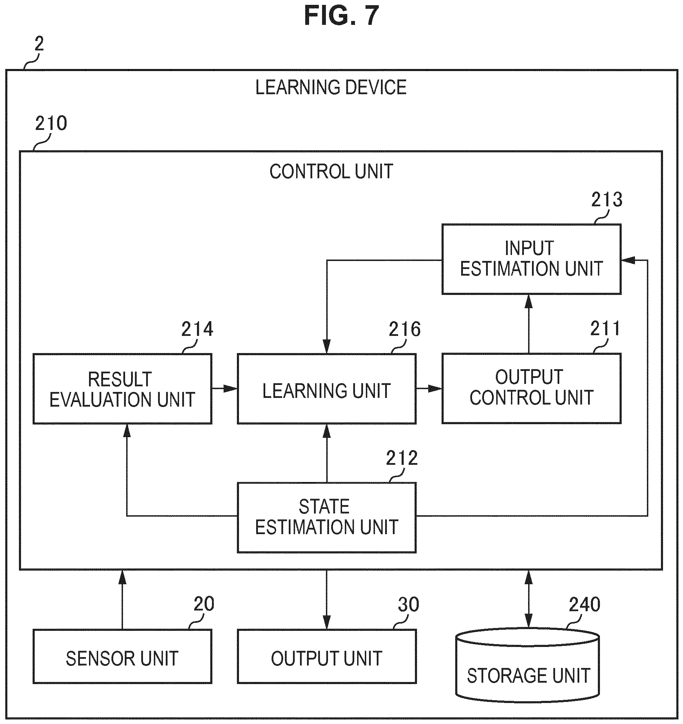

FIG. 7 is a block diagram illustrating a configuration example of the learning device according to the modification. Among structural elements illustrated in FIG. 7, structural elements that are substantially similar to the respective structural elements illustrated in FIG. 1 are denoted with the same reference signs. Therefore, description will be given while appropriately omitting repeated description.

As illustrated in FIG. 7, the learning device 2 according to the modification is different from the information processing device 1 in that parts of respective functions of a control unit 210 and a storage unit 240 are different from the control unit 10 and the storage unit 40 illustrated in FIG.1 and FIG. 2.

As illustrated in FIG. 7, the control unit 210 functions as an output control unit 211, a state estimation unit 212, an input estimation unit 213, a result evaluation unit 214, and a learning unit 216.

The output control unit 211 controls the output unit 30 and causes music, video, and the like to be output. In addition, the output control unit 211 provides the input estimation unit 213 with information indicating how the output unit 30 performs output.

In a way similar to the state estimation unit 13 illustrated in FIG. 2, the state estimation unit 212 estimates a state of a target on the basis of sensing data related to the target. The state estimation unit 212 provides the estimated state of the target to the input estimation unit 213, the result evaluation unit 214, and the learning unit 216.

The input estimation unit 213 estimates input to the target, the input being given to the target by someone/something other than the target. For example, in the case where the result evaluation unit 214 (to be described later) determines that a goal achievement state is changed, the input estimation unit 213 may estimate input to the target related to the change.

For example, the input estimation unit 213 may estimate the input to the target on the basis of information provided by the output control unit 211, the information indicating what kind of output is given by the output unit 30. In addition, the input estimation unit 213 may estimate the input to the target (such as a content of speech, sound, or music) on the basis of sensing data.

The result evaluation unit 214 evaluates (determines) whether or not the goal is achieved, on the basis of the state of the target input from the state estimation unit 212. The result evaluation unit 214 according to the modification may evaluate whether or not respective goals are achieved, the goals being included in a plurality of transmission intentions registered in advance. In addition, the result evaluation unit 214 may determine whether or not an achievement state of a pre-registered goal is changed (whether or not it matches a registered state change). In addition, the result evaluation unit 214 may specify a transmission intention whose achievement state is changed most clearly among transmission intentions whose goal achievement states are changed.

The learning unit 216 performs machine learning and obtains a learner on the basis of input to the target and the transmission intention whose achievement state is changed most clearly, the transmission intention being specified by the result evaluation unit 214. Note that, the machine learning performed by the learning unit 216 is not specifically limited. For example, a deep neural network (DNN) may be used.

For example, the storage unit 240 illustrated in FIG. 7 may store information of music and video output from the output unit 30 in addition to information stored in the storage unit 40 illustrated in FIG. 1.

### (Configuration of output device)

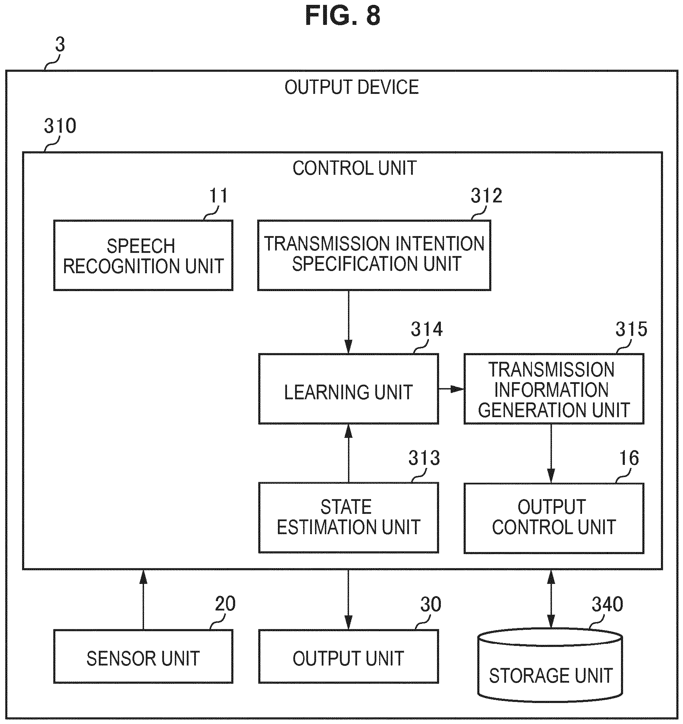

FIG. 8 is a block diagram illustrating a configuration example of an output device according to the modification. Among structural elements illustrated in FIG. 8, structural elements that are substantially similar to the respective structural elements illustrated in FIG. 1 and FIG. 2 are denoted with the same reference signs. Therefore, description will be given while appropriately omitting repeated description. Note that, through communication or another method, the learning device 2 illustrated in FIG. 7 provides the output device 3 according to the modification with information of a learner or the like that is obtained through learning performed by the learning device 2.

As illustrated in FIG. 8, the output device 3 according to the modification is different from the information processing device 1 in that parts of respective functions of a control unit 310 and a storage unit 340 are different from the control unit 10 and the storage unit 40 illustrated in FIG.1 and FIG. 2.

As illustrated in FIG. 8, the control unit 310 also functions as the speech recognition unit 11, a transmission intention specification unit 312, a state estimation unit 313, a learning unit 314, a transmission information generation unit 315, and the output control unit 16.

In a way similar to the transmission intention specification unit 12 illustrated in FIG. 2, the transmission intention specification unit 312 specifies a transmission intention to the target on the basis of the speech text input from the speech recognition unit 11. In the case of obtaining a speech text that matches a transmission intention learned by the learning device 2, the transmission intention specification unit 312 according to the modification may specify the transmission intention as a transmission intention that should be specified.

In a way similar to the state estimation unit 13 illustrated in FIG. 2, the state estimation unit 313 estimates a state of a target on the basis of sensing data related to the target. The state estimation unit 313 according to the modification provides the estimated state of the target to the learning unit 314.

The learning unit 314 inputs the transmission intention specified by the transmission intention specification unit 312 and the state of the target estimated by the state estimation unit 313 into the learner obtained by the learning device 2 through the machine learning based on the transmission intention and the input to the target, and provides obtained output to the transmission information generation unit 315.

The transmission information generation unit 315 generates transmission information on the basis of the pattern table stored in the storage unit 340 and the output from the learner obtained by the learning device 2 through the machine learning based on the transmission intention and the input to the target. Note that, the transmission information generation unit 315 according to the modification may use a pattern table obtained through learning, or may use a pattern table based on input to the target estimated by the learning device 2, for example.

For example, the storage unit 340 illustrated in FIG. 8 stores information provided by the learning device 2 in addition to information stored in the storage unit 40 illustrated in FIG. 1.

### (Operation example at time of learning)

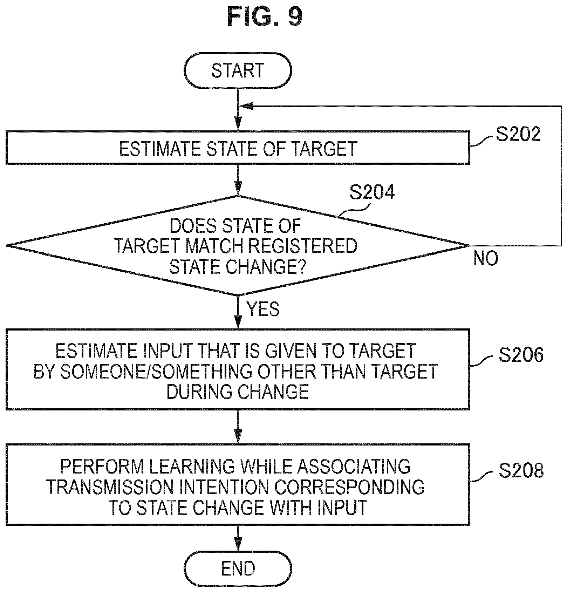

The configuration example according to the modification has been described above. Next, with reference to FIG. 9, an operation example at the time of learning according to the modification will be described. FIG. 9 is a flowchart illustrating an operation example of the learning device 2 according to the modification.

First, as illustrated in FIG. 9, the state estimation unit 212 estimates a state of a target on the basis of sensing data (Step S202). Next, the result evaluation unit 214 determines whether or not the state of the target matches a registered state change (whether or not an achievement state of a pre-registered goal is changed) on the basis of the state of the target (Step S204). The process returns to Step S202 in the case where the state of the target does not match the registered state change (NO in Step S204.

In the case where the state of the target matches the registered state change (YES in Step S202), the input estimation unit 213 estimates input to the target, the input being given to the target by someone/something other than the target during the state change (Step S206). Next, the learning unit 216 performs learning (Step S208) while associating a transmission intention corresponding to a state change (the transmission intention whose achievement state is changed most clearly) with the input to the target estimated in Step S206.

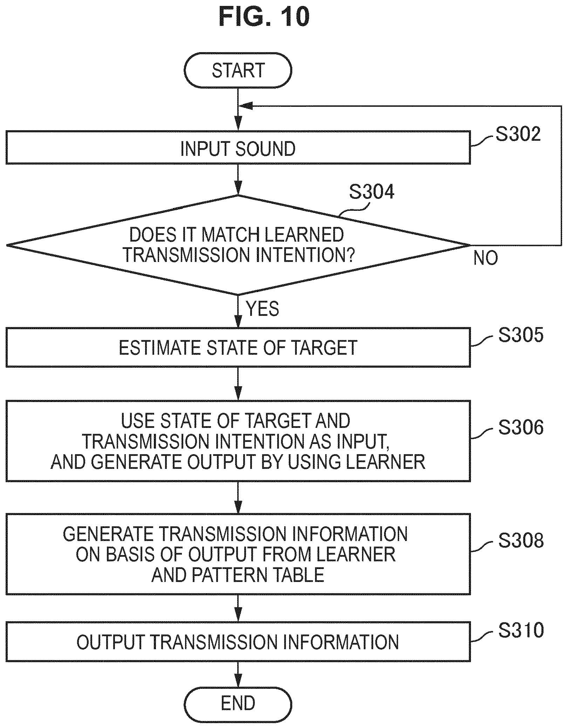

Next, with reference to FIG. 10, an operation example at the time of output according to the modification will be described. FIG. 10 is a flowchart illustrating an operation example of the output device 3 according to the modification. Note that, for example, the process illustrated in FIG. 10 may be performed after the process illustrated in FIG. 9 ends and the learner obtained through the process illustrated in FIG. 9 is provided to the output device 3.

First, as illustrated in FIG. 10, a user first inputs a sound command (Step S302). Next, the transmission intention specification unit 312 determines whether or not a learned transmission intention matches a speech text obtained by the speech recognition unit 11 recognizing the sound command (Step S304). The process returns to Step S302 in the case where the speech text does not match the learned transmission intention (NO in Step S304).

In the case where the speech text matches the learned transmission intention (YES in Step S304), the state estimation unit 313 estimates a state of a target on the basis of sensing data (S305). Next, the learning unit 314 inputs the transmission intention and the state of the target estimated in Step S305 to the learner, and generates output (Step S306).

Next, the transmission information generation unit 315 generates transmission information on the basis of the output from the learner and the pattern table (Step S308). The output unit 30 outputs the generated transmission information under the control of the output control unit 16 (Step S310).

### (Effect)

As described above, according to the modification, it is possible to output transmission information by using a learner obtained in advance through learning. Therefore, by performing sufficient learning in advance, it is possible for the output device to output the transmission information that guides a target accurately without repeating the reinforcement learning and output, for example. In addition, for example, in the case where the target is a dementia patient, it is possible to perform learning in advance in a daily life before the target becomes demented.

### <4-3. Modification 3>

In the above-described embodiment, the example in which the respective functions are installed in a single device (such as the information processing device 1) has been described. However, the present technology is not limited thereto. Next, an example in which the above-described functions are achieved by the plurality of devices that cooperate with each other, will be described as a modification 3.

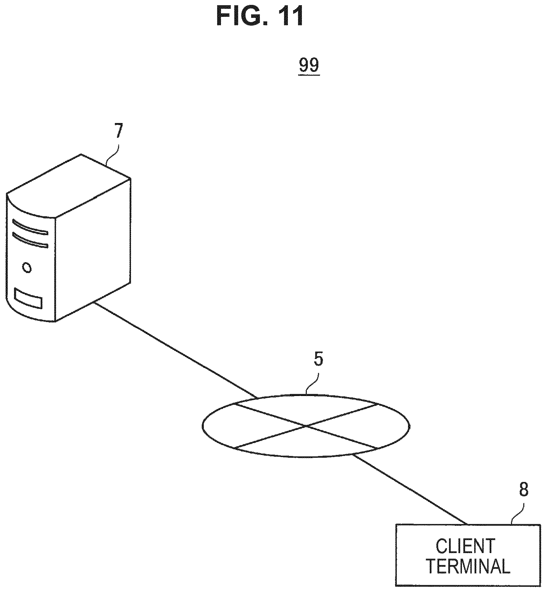

FIG. 11 is an explanatory diagram illustrating a configuration of an information processing system 99 according to the modification. As illustrated in FIG. 7, the information processing system 99 according to the modification includes a communication network 5, a server 7, and a client terminal 8.

The communication network 5 is a wired or wireless transmission path through which information is sent from devices or systems connected with the communication network 5. For example, the communication network 5 may include a public network, various kinds of local area networks (LANs), a wide area network (WAN), and the like. The public network includes the Internet, a telephone network, a satellite communication network, and the like, and the LANs include Ethernet (registered trademark). In addition, the communication network 5 may include a dedicated line network such as an Internet Protocol Virtual Private Network (IP-VPN). As illustrated in FIG. 11, the server 7 and the client terminal 8 are connected to each other via the communication network 5.

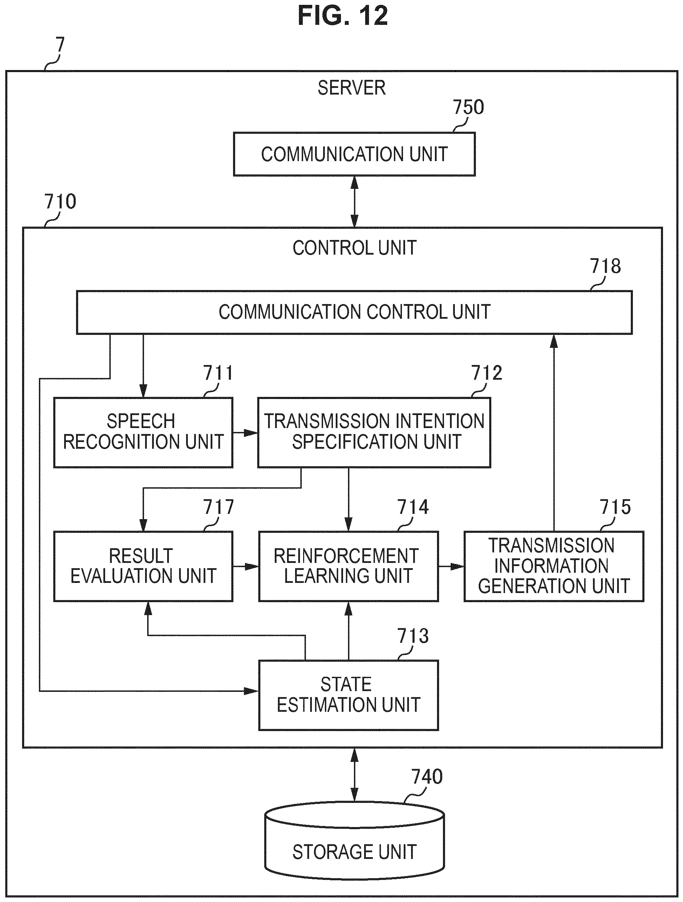

FIG. 12 is a block diagram illustrating a configuration example of the server 7 illustrated in FIG. 11. As illustrated in FIG. 11, the server 7 according to the modification is an information processing device including a control unit 710, a storage unit 740, and a communication unit 750.

The control unit 310 controls respective structural elements of the server 7. As illustrated in FIG. 11, the control unit 710 according to the modification also functions as a speech recognition unit 711, a transmission intention specification unit 712, a state estimation unit 713, a reinforcement learning unit 714, a transmission information generation unit 715, an output control unit 716, a result evaluation unit 717, and a communication control unit 718.

The speech recognition unit 711 recognizes voice (sound command) of a user received from the client terminal 8 via the communication unit 750, and converts the voice into a speech text.

In a way similar to the transmission intention specification unit 12 described with reference to FIG. 2, the transmission intention specification unit 712 specifies a transmission intention to the target on the basis of the speech text input from the speech recognition unit 711.

In a way similar to the state estimation unit 13 described with reference to FIG. 2, the state estimation unit 713 estimates a state of a target on the basis of sensing data related to the target. The state estimation unit 713 according to the modification is different from the state estimation unit 13 described with reference to FIG. 2 in that the state estimation unit 713 estimates the state of the target on the basis of the sensing data received from the client terminal 8 via the communication unit 750.

In a way similar to the reinforcement learning unit 14 described with reference to FIG. 2, the reinforcement learning unit 714 updates a reinforcement learner through reinforcement learning and provides output from the reinforcement learner to the transmission information generation unit 715.

The transmission information generation unit 715 generates transmission information on the basis of the output (the action A) from the reinforcement learner and the pattern table stored in the storage unit 740. The transmission information generated by the transmission information generation unit 715 is provided to the communication control unit 718.

In a way similar to the result evaluation unit 17 described with reference to FIG. 2, the result evaluation unit 717 evaluates (determines) whether or not the goal is achieved, on the basis of the state of the target input from the state estimation unit 713.

The communication control unit 718 (an example of the acquisition unit) controls communication with the client terminal 8 performed by the communication unit 750. For example, it is possible to receive (acquire) sensing data related to the target and voice of the user and transmit the transmission information under the control of the communication control unit 718.

The storage unit 740 stores programs and parameters for causing the respective structural elements of the server 7 to function. In addition, the storage unit 740 may store a pattern table in a way similar to the storage unit 40 described with reference to FIG. 2.

The communication unit 750 communicates information to the client terminal 8 under the control of the communication control unit 718.

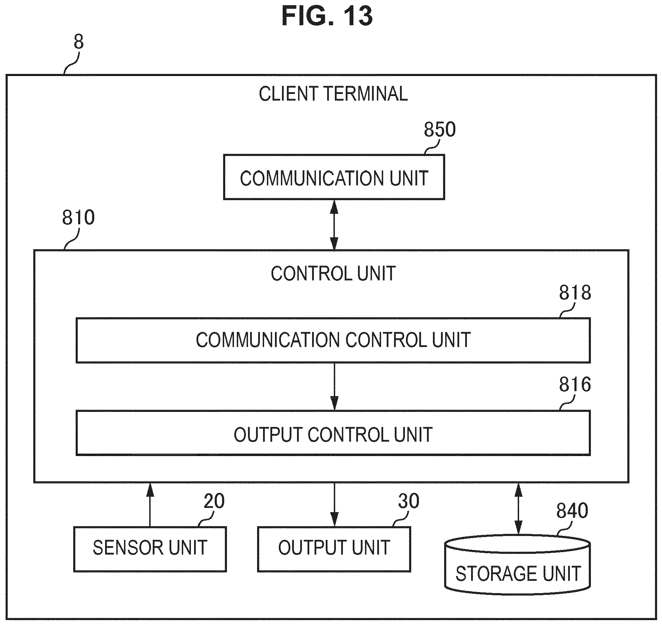

FIG. 13 is a block diagram illustrating a configuration example of the client terminal 8 illustrated in FIG. 11. As illustrated in FIG. 13, the client terminal 8 according to the modification is an information processing device including the sensor unit 20, the output unit 30, a control unit 810, a storage unit 840, and a communication unit 850. Among the structural elements illustrated in FIG. 13, structural elements that are substantially similar to the respective structural elements illustrated in FIG. 1 and FIG. 2 are denoted with the same reference signs. Therefore, description will be given while appropriately omitting repeated description.

The control unit 810 controls respective structural elements of the client terminal 8. As illustrated in FIG. 13, the control unit 810 according to the modification also functions as an output control unit 816 and a communication control unit 818.

The output control unit 816 (an example of the processing unit) performs an output control process on the output unit 30. For example, the output control unit 816 performs the output control process on the basis of transmission information that the communication control unit 818 has caused the communication unit 850 to receive.

The communication control unit 818 controls communication performed by the communication unit 850. For example, when the communication control unit 818 controls the communication unit 850, it is possible for the communication unit 850 to transmit sensing data related to a target and voice of a user to the server 7 and receive transmission information from the server 7.

The storage unit 840 stores programs and parameters for causing the respective structural elements of the client terminal 8 to function.

Note that, operation performed by the information processing system 99 according to the modification is similar to the operation example described with reference to FIG. 4 except the process related to communication between the server 7 and the client terminal 8. Therefore, repeated description will be omitted.

In addition, the example in which the server 7 sends the transmission information to the client terminal 8 has been described above. However, output from the reinforcement learner obtained by the reinforcement learning unit 714 may be sent to the client terminal 8. In such a case, the client terminal 8 may have the functions of the transmission information generation unit 715 and generate transmission information on the basis of a pattern table stored in the storage unit 840.

### (Effect)

According to the modification, it may be possible to disperse the processes to the server and the client terminal and improve process efficiency. In addition, FIG. 11 illustrates the example in which there are the single server and the single client terminal. However, efficiency of the reinforcement learning may be improved in the case where there are a plurality of client terminals corresponding to a single server, for example.

### <<5. Hardware configuration example>>

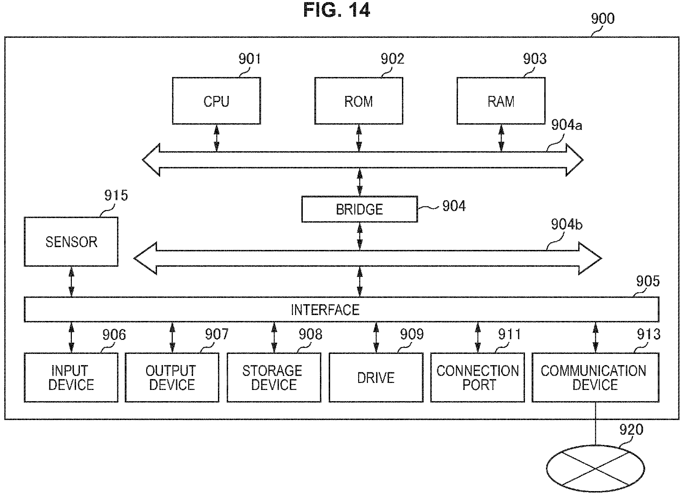

The embodiment of the present disclosure has been described above. Last of all, with reference to FIG. 14, a hardware configuration of the information processing device according to the embodiment will be described. FIG. 14 is a block diagram illustrating an example of a hardware configuration of an information processing device according to the embodiment. Note that, for example, an information processing device 900 illustrated in FIG. 14 may implement the information processing device 1, the information processing device 1-2, the learning device 2, the output device 3, the server 7, and the client terminal 8. The information processes performed by the information processing device 1, the information processing device 1-2, the learning device 2, the output device 3, the server 7, and the client terminal 8 according to the embodiment are implemented by operating cooperatively software and hardware (to be described later).

As illustrated in FIG. 14, the information processing device 900 includes a central processing unit (CPU) 901, a read only memory (ROM) 902, a random access memory (RAM) 903, and a host bus 904a. In addition, the information processing device 900 includes a bridge 904, an external bus 904b, an interface 905, an input device 906, an output device 907, a storage device 908, a drive 909, a connection port 911, a communication device 913, and a sensor 915. The information processing device 900 may include a processing circuit such as a DSP or an ASIC instead of the CPU 901 or along therewith.

The CPU 901 functions as an arithmetic processing device and a control device and controls the overall operation in the information processing device 900 according to various programs. Further, the CPU 901 may be a microprocessor. The ROM 902 stores programs, operation parameters, and the like used by the CPU 901. The RAM 903 temporarily stores programs used in execution of the CPU 901, parameters appropriately changed in the execution, and the like. The CPU 901 may form the control unit 10, the control unit 10-2, the control unit 210, the control unit 310, the control unit 710, the control unit 810, and the like, for example.

The CPU 901, the ROM 902, and the RAM 903 are connected by the host bus 904a including a CPU bus and the like. The host bus 904a is connected with the external bus 904b such as a peripheral component interconnect/interface (PCI) bus via the bridge 904. Further, the host bus 904a, the bridge 904, and the external bus 904b are not necessarily separately configured and such functions may be mounted in a single bus.

The input device 906 is realized by a device through which a user inputs information, such as a mouse, a keyboard, a touch panel, a button, a microphone, a switch, and a lever, for example. In addition, the input device 906 may be a remote control device using infrared ray or other electric waves, or external connection equipment such as a cellular phone or a PDA corresponding to an operation of the information processing device 900, for example. Furthermore, the input device 906 may include an input control circuit or the like which generates an input signal on the basis of information input by the user using the aforementioned input means and outputs the input signal to the CPU 901, for example. The user of the information processing device 900 may input various types of data or order a processing operation for the information processing device 900 by operating the input device 906.

The output device 907 is formed by a device that may visually or aurally notify the user of acquired information. As such devices, there are a display device such as a CRT display device, a liquid crystal display device, a plasma display device, an EL display device, or a lamp, a sound output device such as a speaker and a headphone, a printer device, and the like. The output device 907 outputs results acquired through various processes performed by the information processing device 900, for example. Specifically, the display device visually displays results acquired through various processes performed by the information processing device 900 in various forms such as text, images, tables, and graphs. On the other hand, the sound output device converts audio signals including reproduced sound data, audio data, and the like into analog signals and aurally outputs the analog signals. The output device 907 may form the output unit 30, for example.

The storage device 908 is a device for data storage, formed as an example of a storage unit of the information processing device 900. For example, the storage device 908 is realized by a magnetic storage device such as an HDD, a semiconductor storage device, an optical storage device, a magneto-optical storage device, or the like. The storage device 908 may include a storage medium, a recording device for recording data on the storage medium, a reading device for reading data from the storage medium, a deletion device for deleting data recorded on the storage medium, and the like. The storage device 908 stores programs and various types of data executed by the CPU 901, various types of data acquired from the outside, and the like. The storage device 908 may form the storage unit 40, the storage unit 240, the storage unit 340, the storage unit 740, and the storage unit 840, for example.

The drive 909 is a reader/writer for storage media and is included in or externally attached to the information processing device 900. The drive 909 reads information recorded on a removable storage medium such as a magnetic disc, an optical disc, a magneto-optical disc, or a semiconductor memory mounted thereon, and outputs the information to the RAM 903. In addition, the drive 909 may write information regarding the removable storage medium.

The connection port 911 is an interface connected with external equipment and is a connector to the external equipment through which data may be transmitted through a universal serial bus (USB) and the like, for example.

The communication device 913 is a communication interface formed by a communication device for connection to a network 920 or the like, for example. The communication device 913 is a communication card or the like for a wired or wireless local area network (LAN), long term evolution (LTE), Bluetooth (registered trademark), or wireless USB (WUSB), for example. In addition, the communication device 913 may be a router for optical communication, a router for asymmetric digital subscriber line (ADSL), various communication modems, or the like. For example, the communication device 913 may transmit/receive signals and the like to/from the Internet and other communication devices according to a predetermined protocol such as, for example, TCP/IP. For example, the communication device 913 may form the communication unit 750 and the communication unit 850.

The sensor 915 corresponds to various types of sensors such as an acceleration sensor, a gyro sensor, a geomagnetic sensor, a light sensor, a sound sensor, a distance measuring sensor, and a force sensor, for example. The sensor 915 acquires information regarding a state of the information processing device 900 itself, such as an attitude and a movement speed of the information processing device 900, and information regarding a surrounding environment of the information processing device 900, such as brightness and noise of the periphery of the information processing device 900. In addition, the sensor 915 may include a GPS sensor that receives a GPS signal, and measures latitude, longitude, and altitude of the device. The sensor 915 may form, for example, the sensor unit 20.

Further, the network 920 is a wired or wireless transmission path of information transmitted from devices connected to the network 920. For example, the network 920 may include a public circuit network such as the Internet, a telephone circuit network, or a satellite communication network, various local area networks (LANs) including Ethernet (registered trademark), a wide area network (WAN), and the like. In addition, the network 920 may include a dedicated circuit network such as an internet protocol-virtual private network (IP-VPN).

Hereinbefore, an example of a hardware configuration capable of realizing the functions of the information processing device 900 according to this embodiment is shown. The respective components may be implemented using universal members, or may be implemented by hardware specific to the functions of the respective components. Accordingly, according to a technical level at the time when the embodiments are executed, it is possible to appropriately change hardware configurations to be used.

Note that, a computer program for realizing each of the functions of the information processing device 900 according to the present embodiment as described above may be created, and may be mounted in a PC or the like. Furthermore, a computer-readable recording medium on which such a computer program is stored may be provided. The recording medium is a magnetic disc, an optical disc, a magneto-optical disc, a flash memory, or the like, for example. Further, the computer program may be delivered through a network, for example, without using the recording medium. In addition, the above-described computer program may be distributed through, for example, a network without using a recording medium.

### <<6. Conclusion>>

As described above, according to the embodiment of the present disclosure, it is possible to reduce the burden for a target when guiding the target who has difficulty in verbal communication.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

In addition, steps in the above-described embodiment need not be always processed in chronological order in accordance with the order described as a flowchart diagram. For example, steps in the processes in the above-described embodiment may be processed in an order different from the order described as a flowchart diagram, or may be concurrently processed.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   an acquisition unit configured to acquire sensing data related to a target; and
   a transmission information generation unit configured to generate transmission information to be output to the target, on the basis of a transmission intention to the target and the sensing data.
(2) The information processing device according to (1), in which the transmission information is output non-verbally.
(3) The information processing device according to (1) or (2), in which the transmission intention includes a goal that is expected of the target.
(4) The information processing device according to (3), in which the transmission intention is specified on the basis of sound of a user.
(5) The information processing device according to (3) or (4), in which the transmission intention is specified on the basis of the sensing data.
(6) The information processing device according to any one of (3) to (5), further including
   a result evaluation unit configured to evaluate whether or not the goal is achieved, on the basis of the sensing data.
(7) The information processing device according to (6), in which the result evaluation unit makes the evaluation after the transmission information is output.
(8) The information processing device according to (6) or (7), further including
   a reinforcement learning unit configured to perform reinforcement learning on the basis of the transmission intention, the sensing data, and the evaluation made by the result evaluation unit,
   in which the transmission information generation unit generates the transmission information on the basis of output from a reinforcement learner obtained through the reinforcement learning.
(9) The information processing device according to any one of (3) to (5), in which the transmission information generation unit generates the transmission information on the basis of output from a learner obtained through machine learning based on the transmission intention and input to the target.
(10) An information processing device including:
   a communication unit configured to send sensing data related to a target and receive transmission information to be output to the target; and
   a processing unit configured to perform a process on the basis of the transmission information.
(11) An information processing method including:
   acquiring sensing data related to a target; and
   generating, by a processor, transmission information to be output to the target, on the basis of a transmission intention to the target and the sensing data.
(12) An information processing method including:
   sending sensing data related to a target and receiving transmission information to be output to the target; and
   performing a process by a processor on the basis of the transmission information.

### Reference Signs List

- 1: information processing device
- 2: learning device
- 3: output device
- 5: communication network
- 7: server
- 8: client terminal
- 10: control unit
- 11: speech recognition unit
- 12: transmission intention specification unit
- 13: state estimation unit
- 14: reinforcement learning unit
- 15: transmission information generation unit
- 16: output control unit
- 17: result evaluation unit
- 19: transmission intention specification unit
- 20: sensor unit
- 30: output unit
- 40: storage unit
- 850: communication unit

## Claims

1. An information processing device comprising:
an acquisition unit configured to acquire sensing data related to a target; and
a transmission information generation unit configured to generate transmission information to be output to the target, on a basis of a transmission intention to the target and the sensing data.

2. The information processing device according to claim 1, wherein the transmission information is output non-verbally.

3. The information processing device according to claim 1, wherein the transmission intention includes a goal that is expected of the target.

4. The information processing device according to claim 3, wherein the transmission intention is specified on a basis of sound of a user.

5. The information processing device according to claim 3, wherein the transmission intention is specified on a basis of the sensing data.

6. The information processing device according to claim 3, further comprising
a result evaluation unit configured to evaluate whether or not the goal is achieved, on a basis of the sensing data.

7. The information processing device according to claim 6, wherein the result evaluation unit makes the evaluation after the transmission information is output.

8. The information processing device according to claim 6, further comprising
a reinforcement learning unit configured to perform reinforcement learning on a basis of the transmission intention, the sensing data, and the evaluation made by the result evaluation unit,
wherein the transmission information generation unit generates the transmission information on a basis of output from a reinforcement learner obtained through the reinforcement learning.

9. The information processing device according to claim 3, wherein the transmission information generation unit generates the transmission information on a basis of output from a learner obtained through machine learning based on the transmission intention and input to the target.

10. An information processing device comprising:
a communication unit configured to send sensing data related to a target and receive transmission information to be output to the target; and
a processing unit configured to perform a process on a basis of the transmission information.

11. An information processing method comprising:
acquiring sensing data related to a target; and
generating, by a processor, transmission information to be output to the target, on a basis of a transmission intention to the target and the sensing data.

12. An information processing method comprising:
sending sensing data related to a target and receiving transmission information to be output to the target; and
performing a process by a processor on a basis of the transmission information.
